# EUROPÄISCHE PATENTSCHRIFT

(11) **EP 0 680 798 B1**
(45) Veröffentlichungstag und Bekanntmachung des Hinweises auf die Patenterteilung: **05.11.1997**
(21) Anmeldenummer: 95104891.7
(22) Anmeldetag: 01.04.1995
(51) Int. Cl.: B23B 31/12

(54) **Schlüsselloses Spannfutter**
Keyless chuck
Mandrin sans clef

(30) Priorität: 07.05.1994 DE 4416224
(43) Veröffentlichungstag der Anmeldung: 08.11.1995
(73) Patentinhaber: Metabowerke GmbH & Co., D-72622 Nürtingen (DE)
(72) Erfinder: Schnizler, Albrecht, D-72622 Nürtingen (DE)
(74) Vertreter: Elbertzhagen, Otto

(56) Entgegenhaltungen:
- EP-A- 0 325 284
- EP-A- 0 570 918
- EP-A- 0 590 754
- DE-C- 2 341 642
- GB-A- 2 212 079

## Beschreibung

Die Erfindung bezieht sich auf ein Spannfutter der im Gattungsbegriff des Patentanspruchs 1 näher bezeichneten Art.

Solche auch als Backenfutter bezeichnete Spannfutter dienen zum Spannen von Bohrern, Schrauberbits oder dergleichen. Bekannt ist ein derartiges Spannfutter aus der DE 23 41 642 C3, welches bereits die in den Gattungsmerkmalen erwähnte Nachspannvorrichtung aufweist. Allerdings stützt sich bei der bekannten Ausführung die Druckfeder der Nachspannvorrichtung einerseits am Futterkörper und andererseits am Zwischenring ab, und es wird die Spannhülse über eine Verzahnung sowie eine Sperrklinke als Sperrglied am Zwischenring entgegen der Spanndrehrichtung gegenüber dem Zwischenring gesperrt. Folglich wird hierbei mittelbar über den Zwischenring die Kraft der Druckfeder auf die Spannhülse übertragen, womit der Nachteil verbunden ist, daß zur Spannung der in Drehrichtung wirksamen Druckfeder die Griffhülse der Nachspannvorrichtung in der gleichen Drehrichtung betätigt werden muß, in der sich der Futterkörper relativ zur Spannhülse zum Spannen der Spannbacken dreht. Zunächst kann man bei dem bekannten Spannfutter durch Festhalten der Spannhülse die Spannbacken bis zur Anlage an dem betreffenden Werkzeug in ihre Spannlage bringen, wonach die Spannhülse dann in der Hand durchdreht oder der Antriebsmotor angehalten wird. Damit ist der Nachspanneffekt noch nicht eingeleitet, der bewirken soll, daß im Betrieb die Spannbacken den betreffenden Werkzeugschaft zusätzlich mit der Kraft der Druckfeder beaufschlagen, um ein selbsttätiges Lösen der Spannbacken insbesondere bei auftretenden Erschütterungen zu verhindern. Zur Aktivierung des Nachspanneffektes muß bei dem bekannten Spannfutter die Griffhülse unter Festhalten der Spannhülse in der Spanndrehrichtung des Futterkörpers weitergedreht werden, und es ist somit nicht möglich, über den Drehantrieb des Futterkörpers, mit dem die Spannbacken bis in ihre Spannlage überführt werden können, zusätzlich auch die Nachspannvorrichtung zu betätigen. Umgekehrt kann ein Lösen der Nachspannwirkung über den motorischen Antrieb des Futterkörpers nicht bewirkt werden, dazu muß bei dem bekannten Futter die Griffhülse in der Öffnungsdrehrichtung des Futterkörpers gedreht werden und danach ist erst das Öffnen der Spannbacken durch Festhalten der Spannhülse und Drehen des Futterkörpers in der Drehrichtung, in der zuvor die Griffhülse gedreht werden mußte, möglich. Entscheidend für den geschilderten Nachteil ist also, daß die relative Verdrehbarkeit zwischen dem Futterkörper und der Griffhülse nicht zu der relativen Verdrehbarkeit zwischen dem Futterkörper und der Spannhülse paßt, um das Spannen der Spannbacken sowie das nachfolgende Betätigen der Nachspannvorrichtung bzw. umgekehrt das Betätigen der Nachspannvorrichtung und Lösen der Spannbacken jeweils in derselben Relativdrehrichtung bewerkstelligen zu können.

Der Erfindung liegt deshalb die Aufgabe zugrunde, ein Spannfutter der gattungsbildenden Art zu schaffen, bei dem über die Griffhülse und den relativ dazu drehbaren Futterkörper, jeweils in derselben Drehrichtung sowohl die Spannbacken als auch die Nachspannvorrichtung betätigt werden können.

Diese Aufgabe wird bei einem Spannfutter der gattungsgemäßen Art nach der Erfindung durch die kennzeichnenden Merkmale des Patentanspruchs 1 gelöst.

Für die Erfindung ist wesentlich, daß die in Drehrichtung wirksame Druckfeder zwischen der Spannhülse und dem Zwischenring und das in Drehrichtung wirksame Gesperre zwischen dem Zwischenring und dem Futterkörper angeordnet ist. Die Sperrwirkung entgegen der Spanndrehrichtung blockiert den Zwischenring gegenüber dem Futterkörper, und es läuft bei festgehaltener Griffhülse und angetriebenem Futterkörper in der Spanndrehrichtung die Spannhülse unter Spannen der Druckfeder auf den angehaltenen Zwischenring auf, sobald beim Aufsitzen der Spannbacken auf dem betreffenden Werkzeugschaft die Spannhülse von dem Futterkörper in Drehrichtung mitgenommen wird. Da die Spanndrehrichtung für die Spannbacken und für die Nachspannvorrichtung die gleiche ist, kann hier in einem Zuge durch Festhalten der Griffhülse das Spannen des Spannfutters soweit vorgenommen werden, daß auch die Nachspannvorrichtung am Ende des Spannvorganges aktiviert ist. In umgekehrter Drehrichtung ist es möglich, das Spannfutter zu lösen, wobei nacheinander zunächst die Nachspannvorrichtung entsichert und dann die Spannbacken in ihre Offenlage überführt werden.

Vorteilhafte Ausgestaltungsmerkmale der Erfindung ergeben sich aus den Unteransprüchen.

Die Erfindung wird nachfolgend anhand der Zeichnng an Ausführungsbeispielen noch näher erläutert. Dabei zeigen:
- Fig. 1: die Ansicht eines Spannfutters teilweise im Längsschnitt,
- Fig. 2: einen Querschnitt durch das Spannfutter nach Figur 1 im Bereich der Nachspannvorrichtung,
- Fig. 3: einen Querschnitt durch das Spannfutter gemäß Figur 1 im Bereich der Spannhülse und
- Fig. 4: eine teilgeschnittene Ansicht eines Spannfutters ähnlich Figur 1 jedoch mit zusätzlichem rückwärtigem Griffring.

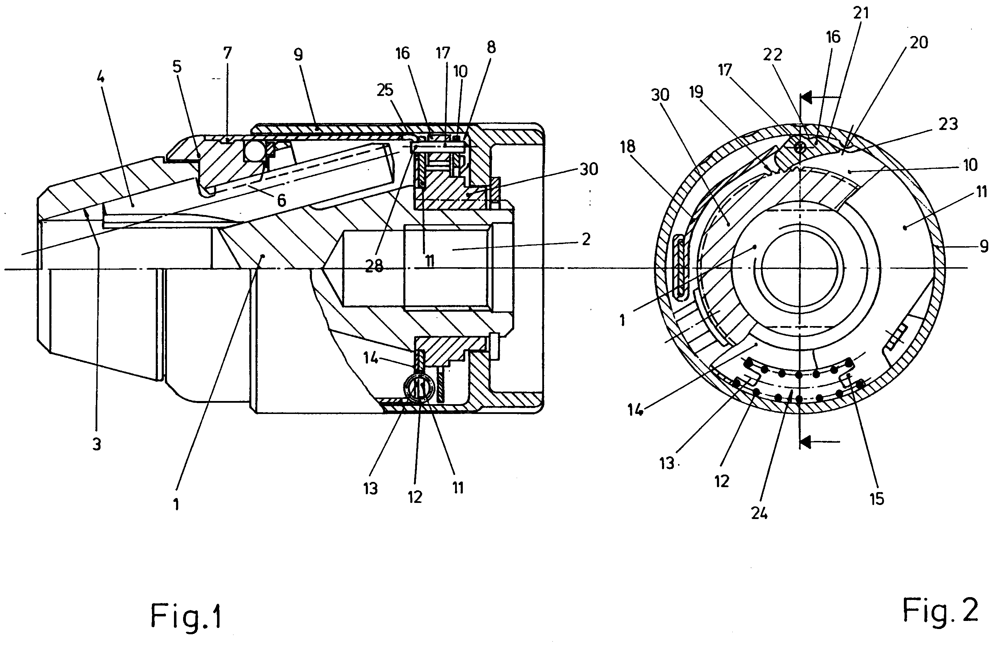

Im einzelnen zeigt Figur 1 einen zentralen Futterkörper 1, bei dem sich um einen rotationssymmetrischen Körper handelt, der sich im wesentlichen über die gesamte Länge des Spannfutters erstreckt. An seinem rückwärtigen Ende hat der Futterkörper 1 eine Spindelaufnahme 2, über die das Spannfutter auf eine Abtriebsspindel einer elektromotorischen Handbohrmaschine oder dergl. aufgesetzt wird. Zum vorderen Ende hin sind in den Futterkörper 1 nach vorn hin aufeinander zulaufende Schrägführungen 3 eingearbeitet, und in jeder dieser Schrägführungen ist eine Spannbacke 4 gehalten. In der Regel sind im 120°-Abstand drei solcher Spannbacken 4 vorhanden, die an ihren Innenseiten mit dem Futterkörper 1 achsparallele Spannflächen aufweisen. Durch Verschieben entlang der Schrägführungen 3 nach vorn hin können die Spannbacken 4 in ihre Spannlage überführt werden, die dann erreicht ist, wenn die Spannflächen der Spannbacken 4 am Schaft des betreffenden Werkzeugs anliegen.

Angetrieben werden die Spannbacken 4 mittels einer relativen Drehung zwischen dem Futterkörper 1 und einem Gewindering 5, der mit einem Innengewinde in Schrägverzahnungen 6 der Spannbacken 4 eingreift. Drehfest ist mit dem Gewindering 5 eine Spannhülse 7 verbunden, die nach hinten hin bis über den Verstellbereich der Spannbacken 4 hinausreicht und sich bis zu einer Nachspannvorrichtung 8 erstreckt. Die Spannhülse 7 und der Futterkörper 1 sind relativ zueinander so lange drehbar, wie nicht die spannbacken 4 sich entweder in ihrer vorderen Spannlage oder in ihrer rückwärtigen Endlage befinden. Steht die Spannhülse 7 still und dreht sich der Futterkörper 1, werden die Spannbacken 4 entlang der Schrägführungen 3 verschoben, ist der Verschiebeweg der Spannbacken 4 in der Spannlage und der rückwärtigen Endlage erschöpft, versucht dann der Futterkörper 1 über die Spannbacken 4 und den Gewindering 5 die Spannhülse 7 in seiner Drehung mitzunehmen. Das gleiche gilt, wenn in der Spanndrehrichtung die Spannbacken 4 auf einen Werkzeugschaft aufgelaufen sind.

Die Spannhülse 7 wird von einer Griffhülse 9 umgeben, die sich über die Nachspannvorrichtung 8 hinweg nach vorne hin bis nahe dem Vorderende der Spannhülse 7 erstreckt. Die Griffhülse 9 wird zum Spannen und Lösen des Spannfutters ergriffen, die Spannhülse 7 dagegen nicht. Die Spannhülse 7 und die Griffhülse 9 sind begrenzt relativ zueinander drehbar, grundsätzlich besteht jedoch eine in Drehrichtung wirksame Verbindung zwischen der Spannhülse 7 und der Griffhülse 9 über die Nachspannvorrichtung 8.

Die Nachspannvorrichtung 8 weist einen Zwischenring 10, 11 auf, der aus zwei miteinander drehfest verbundenen Scheiben 10 und 11 besteht. Zwischen der vorderen Scheibe 11 des Zwischenringes 10, 11 und der Spannhülse 7 ist eine in Drehrichtung wirksame Druckfeder 12 angeordnet. Die Spannhülse 7 hat dazu ein Widerlager 13 für die Druckfeder 12, welches sich an einem in radialer Richtung liegenden Flansch 14 befindet, der am rückwärtigen Ende einstückig an der Spannhülse 7 angeordnet ist. Ebenso hat die Scheibe 11 des Zwischenringes 10, 11 ein zweites Widerlager 15 für die Druckfeder 12, welches entlang eines mit der Achse des Futterkörpers 1 konzentrischen Kreisabschnittes dem ersten Widerlager 13 am Flansch 14 der Spannhülse 7 gegenüberliegt. Zwischen diesen Widerlagern 13 und 15 erstreckt sich entlang des erwähnten Kreisabschnittes die Druckfeder 12. Um Platz für die Druckfeder 12 zu schaffen, haben die Scheibe 11 des Zwischenringes 10, 11 und der Flansch 14 der Spannhülse 7 an ihrem Umfang Aussparungen 24.

Die Druckfeder 12 hat in ihrer Spannstellung eine Kraft aufzubringen, die die Spannhülse 7 in Spanndrehrichtung beaufschlagt, um die Spannbacken 4 in ihrer Spannlage an dem Werkzeugschaft zu sichern. Dazu muß die Druckfeder 12 gespannt und in ihrer Spannlage am Futterkörper 1 abgestützt werden, was über den Zwischenring 10, 11 geschieht.

Etwa diametral gegenüber der Aussparung 24 der Scheibe 11 ist am Zwischenring 10, 11 ein Sperrglied 16 in Gestalt einer Sperrklinke gelagert, die auf einer zwischen den Scheiben 10 und 11 sich erstreckenden Achse 17 sitzt. Das Sperrglied 16 ist von einer Blattfeder 18 derart beaufschlagt, daß es in seiner Sperrlage in eine Außenverzahnung 19 eines Rastenringes 30 eingreift, der drehfest mit dem Futterkörper 1 ist. In der Kraftrichtung der Druckfeder 12 stützt sich über das Sperrglied 16 der Zwischenring 10, 11 an dem Rastenring 30 und damit an dem Futterkörper 1 ab, solange sich das Sperrglied 16 in der Sperrlage befindet, die aufgehoben werden kann.

Der Zwischenring 10, 11 wiederum ist gegenüber der Griffhülse 9 nur begrenzt drehbar, denn die Griffhülse 9 hat einen Innenanschlag 20, auf den der Zwischenring 10,11 mit einem Gegenanschlag 23 aufläuft, sobald in der Spanndrehrichtung der Futterkörper 1 angetrieben und die Griffhülse 9 festgehalten wird. Dies ergibt sich daraus, daß - wie erwähnt - bei festsitzenden Spannbacken 4 der Futterkörper 1 die Spannhülse 7 über den Gewindering 5 mitnimmt und die Spannhülse 7 über die Druckfeder 12 den Zwischenring 10, 11 in Spanndrehrichtung beaufschlagt. Bei festgehaltener, also nicht mitdrehender Griffhülse 9 wird bei Anlage des Gegenanschlages 23 am Innenanschlag 20 der Griffhülse 9 der Zwischenring 10, 11 in seiner weiteren Drehung blockiert, und es wird dann über die Spannhülse 7 die Druckfeder 12 gespannt, wobei sich der Futterkörper 1 unter dem Sperrglied 16 am Zwischenring 10, 11 wegdrehen kann. Ist die gespannte Endlage der Druckfeder 12 erreicht, bleibt entweder bei zu schwacher Antriebskraft der Futterkörper 1 stehen oder dreht bei stärkerer Antriebskraft die Griffhülse 9 in der festhaltenen Hand durch. Damit ist bei aufsitzenden Spannbacken 4 die Nachspannvorrichtung 8 aktiviert, und es stützt sich die Spannhülse 7 unter der Kraft der Feder 12 am Futterkörper 1 ab. Wichtig ist, daß sowohl für das Überführen der Spannbacken 4 in ihre Spannlage als auch das Aktivieren der Nachspannvorrichtung 8 der Futterkörper 1 bei festgehaltener Griffhülse 9 seine Drehrichtung nicht ändern muß.

Zum Lösen der Nachspannvorrichtung 8 und der Spannbacken 4 wird der Futterkörper 1 bei festgehaltener Griffhülse 9 in umgekehrter Drehrichtung angetrieben. Hierbei läuft das vom Futterkörper mitgenommene Sperrglied 16 mit einer Auflaufseite 21, die als Auflaufschräge ausgebildet ist, auf den Innenanschlag 20 der Griffhülse 9 auf, wodurch die Sperrnase des Sperrgliedes 16 aus der Außenverzahnung 19 des Rastenrings 30 freikommt, wonach sich dann der Futterkörper 1 unter dem Sperrglied 16 bei gleichzeitiger Entspannung der Druckfeder 12 hinwegdrehen kann. Bei weiter festgehaltener Spannhülse 7 öffnen sich dann bei in gleicher Richtung fortgesetzter Drehung des Futterkörpers 1 die Spannbacken 4. Das Sperrglied 16 wird in seiner Entriegelungslage durch den Innenanschlag 20 der Griffhülse 9 gesichert, wodurch zugleich eine Relativdrehung zwischen der Griffhülse 9 und dem Zwischenring 10, 11 in Entspannungsdrehrichtung unterbunden wird. Das Sperrglied 16 hat auf seiner der Griffhülse 9 zugewandten Seite eine taschenförmige Ausnehmung 22, in welcher der Innenanschlag 20 der Griffhülse 9 in der Entriegelungslage des Sperrgliedes 16 aufgenommen wird.

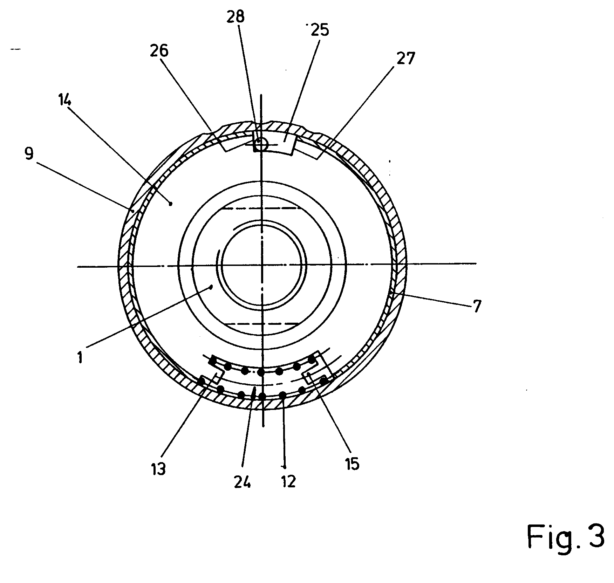

Grundsätzlich kann die Druckfeder 12 zwischen dem Zwischenring 10, 11 und dem Flansch 14 der Spannhülse 7 auch als Zugfeder wirken, damit beim Lösen des Spannfutters über die Griffhülse 9 die Spannhülse 7 angehalten werden kann, wenn sich der Futterkörper 1 entgegen der Spanndrehrichtung dreht. Zweckmäßig ist jedoch, den Weg der Druckfeder 12 sowohl in Spannungs- als auch in Entspannungsrichtung zu begrenzen. Wie Figur 3 dazu veranschaulicht, ist im Außenrandbereich in den Flansch 14 der Spannhülse 7 ein Fenster 25 eingeschnitten, welches mit seinen in Radialrichtung liegenden Flanken Anschläge 26 und 27 bildet. In das Fenster 25 ragt ein Finger 28 hinein, bei dem es sich um eine Verlängerung der Achse 17 handelt, die im Zwischenring 10, 11 achsparallel angeordnet und auf der das Sperrglied 16 gelagert ist. Um den Abstand der Anschläge 26 und 27 in Drehrichtung gesehen ist damit die Spannhülse 7 relativ zum Zwischenring 10, 11 verdrehbar, und dieser Weg reicht bei passender Dimensionierung der Druckfeder 12, um die die Spannbacken 4 zusätzlich sichernde Feder-Druckkraft aufzubringen. In der Ausgangslage hält die Druckfeder 12 den Finger 28 an der Flanke 26 des Fensters 25, dies ist auch die Position, in der beim Öffnungsvorgang des Spannfutters über die Griffhülse 9 und den Zwischenring 10, 11 die Spannhülse 7 festgehalten werden kann. Beim Spannvorgang wandert mit dem Aufsitzen der Spannbacken auf den betreffenden Werkzeugschaft unter Zusammendrücken der Druckfeder 12 der Finger 28 im Fenster 25 vom Anschlag 26 zum Anschlag 27, der so angeordnet ist, daß bei seinem Anfahren ein Blocken der Druckfeder 12 noch nicht stattfindet. Liegt der Finger 28 an dem Anschlag 27 im Fenster 25 der Spannhülse 7 an, besteht ein Drehschluß zwischen der Spannhülse 7 und dem Zwischenring 10, 11, der bei Anlage seines Gegenanschlages 23 am Innenanschlag 20 der Griffhülse 9 mit dieser ebenfalls in Spannrichtung drehfest ist.

Die Handhabung des Spannfutters ist sehr einfach. Bei offenen Spannbacken wird zum Spannen des Werkzeugs der Futterkörper 1 in Spanndrehrichtung angetrieben und dabei die Griffhülse 9 festgehalten. Sobald der Zwischenring 10, 11 mit seinem Gegenanschlag 23 auf den Innenanschlag 20 der Griffhülse 9 aufgelaufen ist, wird über die Griffhülse 9 und den Zwischenring 10, 11 die Drehmitnahme der Spannhülse 7 unterbunden. Infolge der relativen Drehung zwischen dem Futterkörper 1 und der Spannhülse 7 bewegen sich die Spannbacken 4 in ihre Spannstellung. Sobald die Spannbacken 4 auf dem betreffenden Werkzeugschaft aufsitzen, wird vom Futterkörper 1 über den Gewindering 5 die Spannhülse 7 in Spanndrehrichtung mitgenommen. Bei weiter festgehaltener Griffhülse 9 drückt sich nun die Druckfeder 12 zusammen, wobei im Fenster 25 des Flansches 14 der Spannhülse 7 der Finger 28 vom Anschlag 26 zum Anschlag 27 wandert. Da bei Anlage des Zwischenringes 10, 11 am Innenanschlag 20 der Griffhülse 9 das Sperrglied 16 in die Verzahnung 19 des Rastenringes 30 eingreift, kann sich nunmehr nach dem Loslassen der Griffhülse 9 der Zwischenring 10, 11 nicht mehr entgegen der Spanndrehrichtung gegenüber dem Futterkörper 1 verdrehen, so daß dann der Zwischenring 10, 11 ein mit dem Futterkörper 1 in Spannrichtung der Druckfeder 12 festes Widerlager bildet, wodurch die Spannhülse 7 mit der Federkraft beaufschlagt wird, welche die Spannbacken zusätzlich am gespannten Werkzeug festhält. Damit ist der Spannvorgang beendet, der allein ohne Änderung der Drehrichtung über den Futterkörper 1 und die Griffhülse 9 bewirkt werden kann. In umgekehrter Drehrichtung des Futterkörpers 1 erfolgt die Lösung des Spannfutters nach Freigabe des Zwischenringes 10, 11 gegenüber dem Futterkörper 1 beim Auflaufen des Sperrgliedes 16 auf den Innenanschlag 20 der Griffhülse 9.

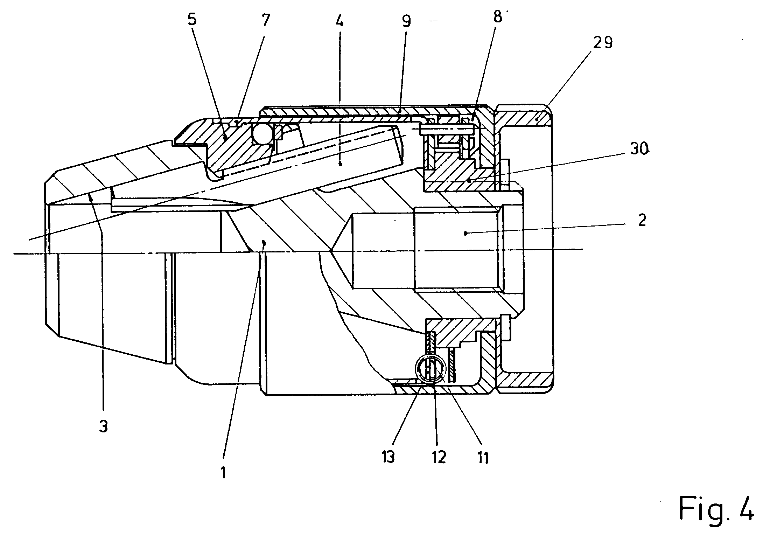

Das vorbeschriebene Spannfutter kann vornehmlich bei Akku-Bohrmaschinen eingesetzt werden, die kein großes Drehmoment entwickeln. Bei Maschinen mit höherer Antriebsleistung muß entweder mit reduzierter Drehzahl gefahren werden, um ein allzu heftiges Durchdrehen der Griffhülse 9 in der Bedienungshand des Benutzers nach dem Spannen oder Lösen des Futters zu verhindern. Zum anderen kann hier aber auch diejenige Ausführung zum Einsatz kommen, die in Figur 4 dargestellt ist. Hier hat das Spannfutter am rückwärtigen Ende einen Griffring 29, der mit dem Futterkörper 1 drehfest verbunden ist. So können bei stillstehender Maschine die Griffhülse 9 und der Griffring 29 relativ zueinander beim Spannen oder Lösen des Futters verdreht werden, insbesondere kann auf diese Weise die Nachspannvorrichtung kontrolliert und gegebenenfalls gespannt oder entspannt werden.

## Patentansprüche

1. Schlüsselloses Spannfutter mit einem Futterkörper (1), einer Spannhülse (7) sowie in Schrägführungen (3) gehaltenen Werkzeugspannbacken (4), die infolge Drehung des Futterkörpers (1) relativ zur Spannhülse (7) verschiebbar sind und in ihrer Spannlage diese Relativdrehung begrenzen, und mit einer Nachspannvorrichtung (8), die eine in Drehrichtung wirksame Druckfeder (12), einen davon beaufschlagten, gegenüber dem Futterkörper (1) und der Spannhülse (7) drehbaren Zwischenring (10, 11), ein entriegelbares Sperrglied (16) am Zwischenring (10, 11) und eine außenliegende, drehbare Griffhülse (9) mit einem Innenanschlag (20) für den Zwischenring (10, 11) aufweist,
dadurch gekennzeichnet,
daß die Druckfeder (12) zwischen der Spannhülse (7) und dem Zwischenring (10, 11) angeordnet ist, der Zwischenring (10, 11) entsprechend dem Federweg der Druckfeder (12) begrenzt gegenüber der Spannhülse (7) drehbar ist und das Sperrglied (16) am Zwischenring (10, 11) in seiner Verriegelungslage den Futterkörper (1) derart beaufschlagt, daß der Futterkörper (1) und der Zwischenring (10, 11) entgegen der Spanndrehrichtung gegeneinander gesperrt sind.

2. Spannfutter nach Anspruch 1,
dadurch gekennzeichnet,
daß an der Spannhülse (7) und/oder am Zwischenring (10, 11) zwei in Drehabstand zueinander angeordnete Anschläge (26, 27) zur Begrenzung der relativen Drehbarkeit zwischen Spannhülse (7) und Zwischenring (10, 11) und damit zur Begrenzung des Federweges der Druckfeder (12) angeordnet sind.

3. Spannfutter nach Anspruch 2,
dadurch gekennzeichnet,
daß die Spannhülse (7) in Radialrichtung einen in Axialrichtung neben dem Zwischenring (10, 11) angeordneten Flansch (14) mit einem Fenster (25) hat, dessen in Umfangsabstand zueinander liegende Flanken die Anschläge (26, 27) bilden, wobei ein am Zwischenring (10, 11) achsparallel vorstehender Finger (28) in dieses Fenster (25) hineinragt.

4. Spannfutter nach einem der Ansprüche 1 bis 3,
dadurch gekennzeichnet,
daß das Sperrglied (16) am Zwischenring (10, 11) eine federbelastete Klinke ist und der Futterkörper (1) eine Umfangsverzahnung (19) hat, in welche das Sperrglied (16) in seiner Verriegelungslage eingreift.

5. Spannfutter nach Anspruch 3 und 4,
dadurch gekennzeichnet,
daß das Sperrglied (16) auf einer Achse (17) am Zwischenring (10, 11) angeordnet ist, die zugleich den in das Fenster (25) im Flansch (14) der Spannhülse (7) hineinragenden Finger (28) bildet.

6. Spannfutter nach einem der Ansprüche 1 bis 5,
dadurch gekennzeichnet,
daß der Innenanschlag (20) der Griffhülse (9) mit einem Gegenanschlag (23) am Zwischenring (10, 11) korrespondiert, dem gegenüber in Umfangsrichtung des Zwischenringes (10, 11) in der Spanndrehrichtung das Sperrglied (16) mit einer Auflaufseite (21) angeordnet ist, bei deren Beaufschlagung durch den Innenanschlag (20) der Griffhülse (9) das Sperrglied (16) in seine Entriegelungsposition unter Freigabe des Futterkörpers (1) überführt wird.

7. Spannfutter nach Anspruch 5 und 6,
dadurch gekennzeichnet,
daß der Zwischenring aus zwei koaxialen, in Abstand voneinander angeordneten Scheiben (10, 11) besteht, zwischen denen das Sperrglied (16) auf seiner die Scheiben (10, 11) verbindenden Achse (17) gelagert ist, wobei zumindest eine dieser Scheiben (10, 11) das eine Widerlager (15) für die Druckfeder (12) aufweist.

8. Spannfutter nach Anspruch 7,
dadurch gekennzeichnet,
daß die eine der beiden Scheiben (10, 11) des Zwischenringes dem Flansch (14) der Spannhülse (7) unmittelbar benachbart ist und diese Scheibe (11) sowie dieser Flansch (14) je eine in Umfangsrichtung liegende Aussparung (24) haben, in denen die Druckfeder (12) angeordnet ist, wobei an den in Umfangsrichtung einander gegenüberliegenden Radialseiten dieser Aussparungen (24) die Widerlager (13, 15) für die Druckfeder (12) vorhanden sind.

9. Spannfutter nach einem der Ansprüche 1 bis 8,
dadurch gekennzeichnet,
daß die außenseitige Griffhülse (9) die darin innenliegende Spannhülse (7) in Axialrichtung völlig oder zumindest weitgehend überdeckt.

10. Spannfutter nach einem der Ansprüche 1 bis 9,
dadurch gekennzeichnet,
daß am rückwärtigen Ende außenseitig neben der Griffhülse (9) ein Griffring (29) koaxial angeordnet ist, der mit dem Futterkörper (1) drehfest verbunden ist.

## Claims

1. Keyless clamping chuck with a chuck body (1), a clamping sleeve (7) as well as tool clamping jaws (4) held in inclined guides (3) whereby the jaws are displaceable following rotation of the chuck body (1) relative to the clamping sleeve (7) and in their clamping position define this relative rotation, and with a secondary clamping device (8) which has a compression spring (12) acting in the rotary direction, an intermediate ring (10,11) biased by the compression spring and rotatable in the opposite direction to the chuck body (1) and the clamping sleeve (7), an unlockable locking member (16) on the intermediate ring (10,11) and an outer rotatable grip sleeve (9) with an inner stop (20) for the intermediate ring (10,11)
characterised in that the compression spring (12) is mounted between the clamping sleeve (7) and intermediate ring (10,11), the intermediate ring (10,11) is restrictedly rotatable relative to the clamping sleeve (7) corresponding to the spring path of the compression spring (12) and the locking member (16) on the intermediate ring (10,11) in its locking position biases the chuck body (1) so that the chuck body (1) and intermediate ring (10,11) are locked against each other opposite the clamping turning direction.

2. Clamping chuck according to claim 1 characterised in that two stops (26,27) arranged at a rotational distance from each other are mounted on the clamping sleeve (7) and/or on the intermediate ring (10,11) to restrict the relative rotation between the clamping sleeve (7) and intermediate ring (10,11) and thus to restrict the spring path of the compression spring (12).

3. Clamping chuck according to claim 2 characterised in that the clamping sleeve (7) in the radial direction has a flange (14) with a window (25) in the axial direction next to the intermediate ring (10,11) whereby the flanks of the flange lying circumferentially spaced from each other form the stops (26,27) wherein a finger (28) projecting axially parallel on the intermediate ring (10,11) projects into this window (25).

4. Clamping chuck according to one of claims 1 to 3 characterised in that the locking member (16) is a spring-loaded pawl on the intermediate ring (10,11) and the chuck body (1) has circumferential toothing (19) in which the locking member (16) engages in its locked position.

5. Clamping chuck according to claim 3 and 4 characterised in that the locking member (16) is mounted on an axis (17) on the intermediate ring (10,11) which forms at the same time the finger (28) projecting into the window (25) in the flange (14) of the clamping sleeve (7).

6. Clamping chuck according to one of claims 1 to 5 characterised in that the inner stop (20) of the grip sleeve (9) corresponds with a counter stop (23) on the intermediate ring (10,11) opposite which the locking member (16) is mounted with a run-up side (21) in the circumferential direction of the intermediate ring (10),11) in the clamping turning direction so that when biased by the inner stop (20) of the grip sleeve (9) the locking member (16) is transferred into its unlocking position whilst releasing the chuck body (1).

7. Clamping chuck according to claim 5 and 6 characterised in that the intermediate ring consists of two coaxial spaced discs (10,11) between which the locking member (16) is mounted on its axis (17) connecting the discs (10,11) wherein at least one of these discs (10,11) has the one abutment (15) for the compression spring (12).

8. Clamping chuck according to claim 7 characterised in that one of the two discs (10,11) of the intermediate ring directly adjoins the flange (14) of the clamping sleeve (7) and this disc (11) as well as this flange (14) each have a circumferentially lying recess (24) in which the compression spring (12) is mounted wherein the abutments (13,15) for the compression spring (12) are provided on the radial sides opposite one another in the circumferential direction.

9. Clamping chuck according to one of claims 1 to 8 characterised in that the outer grip sleeve (9) completely or at least substantially covers the inner clamping sleeve (7) in the axial direction.

10. Clamping chuck according to one of claims 1 to 9 characterised in that a grip ring (29) is mounted coaxial at the rear end on the outside next to the grip sleeve (9) and is connected rotationally secured to the chuck body (1).

## Revendications

1. Mandrin de serrage sans clef composé d'un corps (1), d'une douille de serrage (7) ainsi que de mâchoires de serrage d'outils (4) maintenues dans des guides obliques, qui à la suite du pivotement du corps (1) sont relativement déplaçables par rapport à la douille de serrage (7) et limitent ce pivotement relatif quand elles sont dans leur position de serrage, d'un dispositif de postserrage (8) qui présente un ressort de pression (12) agissant dans le sens de rotation, une bague intermédiaire (10, 11) pouvant tourner par rapport au corps (1) et à la douille de serrage (7) et soumise à l'action du ressort de pression (12), d'un organe de verrouillage (16) déblocable équipant la bague intermédiaire (10, 11) et d'un manchon de préhension rotatif (9) avec butée intérieure (20) pour la bague intermédiaire (10, 11),
caractérisé en ce que
le ressort de pression (12) est disposé entre la douille de serrage (7) et la bague intermédiaire (10, 11), que la bague intermédiaire (10, 11) est rotative, conformément à la course du ressort de pression (12) et dans une mesure limitée par rapport à la douille de serrage (7), et que, lorsqu'il est en position de blocage, l'organe de verrouillage (16), équipant la bague intermédiaire (10, 11), agit sur le corps (1) de sorte que ce corps (1) et la bague intermédiaire (10, 11) se trouvent bloqués par rapport l'un à l'autre, dans le sens de rotation de serrage.

2. Mandrin selon la revendication 1,
caractérisé en ce que
la douille de serrage (7) et/ou la bague intermédiaire (10, 11) sont équipées de deux butées (26, 27) qui, disposées à intervalle de rotation par rapport l'une à l'autre, servent à limiter la possibilité de rotation entre la douille de serrage (7) et l'anneau intermédiaire (19, 11) et, de ce fait, à limiter la course du ressort de pression (12).

3. Mandrin selon la revendication 2,
caractérisé en ce que
la douille de serrage (7) est pourvue, dans le sens radial, d'une bride (14), disposée axialement, à côté de la bague intermédiaire (10, 11), et pourvue d'une fenêtre (25), les flancs, disposés à intervalle circonférentiel par rapport l'un à l'autre, formant les butées (26, 27) et un doigt (28), faisant saillie sur la bague intermédiaire (10, 11), parallèlement à l'axe, pénétrant dans cette fenêtre.

4. Mandrin selon L'une des revendications 1 à 3,
caractérisé en ce que
l'organe de verrouillage (16), prévu sur la bague intermédiaire (10, 11), est un cliquet chargé par ressort et que le corps (1) est pourvu d'une denture péripérique (19) dans laquelle l'organe de verrouillage (16) vient s'encliqueter pour se mettre en position de blocage.

5. Mandrin selon la revendication 3 ou 4,
caractérisé en ce que
l'organe de verrouillage (16) est disposé sur un axe (17) équipant la bague intermédiaire (10, 11), lequel forme, simultanément, le doigt (28) qui pénètre dans la fenêtre (25) de la bride (14) de la douille de serrage (7).

6. Mandrin selon l'une des revendications 1 à 5,
caractérisé en ce que
la butée intérieure (20) du manchon de préhension (9) correspondant à une contre-butée (23) équipant la bague intermédiaire (10, 11), vis-à-vis de laquelle l'organe de verrouillage (16) est disposé, dans la direction circonférentielle de la bague intermédiaire (10, 11), dans le sens de rotation de serrage, avec un côté portant (21), l'organe de verrouillage (16) étant amené en position de déblocage et le corps (1) libéré, quand la butée intérieure (20) du manchon de préhension (9) agit sur ce côté portant (21).

7. Mandrin selon les revendications 5 et 6,
caractérisé en ce que
la bague intermédiaire consiste en deux disques (10, 11) coaxiaux, disposés à intervalle l'un de l'autre et entre lesquels l'organe de verrouillage (16) est monté sur son axe (17) qui réunit les disques (10, 11), l'un de ces disques (10, 11), au moins, présentant une butée (15) pour le ressort de pression (12).

8. Mandrin selon la revendication 7,
caractérisé en ce que
l'un des disques (10, 11) de la bague intermédiaire est directement contigu à la bride (14) de la douille de serrage (7) et que ce disque (11) ainsi que cette bride (14) sont pourvues, chacun, d'un évidement (24) disposé dans le sens circonférenciel et dans lequel le ressort de pression (12) est disposé, les butées (13, 15), prévues pour le ressort de pression 12) étant situées sur les côté radiaux de cet évidement (24) se faisant face dans le sens circonférentiel.

9. Mandrin selon l'une des revendications 1 à 8,
caractérisé en ce que
le manchon de préhension extérieur (9), dans le sens axial, recouvre complètement ou, tout au moins, dans une grande mesure, la douille de serrage (7) qui y est logée.

10. Mandrin selon l'une des revendications 1 à 8,
caractérisé en ce que
un anneau de préhension (29) est disposé, coaxialement et extérieurement, à l'extrémité arrière, à côté du manchon de préhension (9), cet anneau de préhension (29) étant reliée, résistante à la torsion, au corps (1).
